# EUROPEAN PATENT APPLICATION

(11) **EP 0 590 406 A1**
(43) Date of publication of application: **06.04.1994**
(21) Application number: 93114728.4
(22) Date of filing: 14.09.1993
(51) Int. Cl.: H04N 3/30, H04N 3/233

(54) **Device for controlling a beam deflector for scanning a screen of a monitor, especially a high-definition television monitor and monitor including such a device**

(30) Priority: 29.09.1992 FR 9211615
(71) Applicant: NOKIA TECHNOLOGY GmbH, D-75175 Pforzheim (DE)
(72) Inventor: Eusebiu, Matei, F-92390 Villeneuve-la-Garenne (FR)

(57) **Abstract**

This device for controlling a beam deflector for scanning a screen of a monitor, especially a high-definition television monitor, the deflector (20) including means for horizontally deflecting and means for vertically deflecting the beams, is characterised in that the horizontal deflection means are connected, on the one hand, to means (21) for generating a symmetrical alternating voltage and, on the other hand, to S-correction means (22), switched at each change of slope of the symmetrical voltage, for generating, in these deflection means, a symmetrical control current for actuating a symmetrical forward-and-back scanning of the screen.

## Description

The present invention relates to a device for controlling a beam deflector for scanning a screen of a monitor, especially a high-definition television monitor, and a monitor including such a device.

Deflectors of this type include means for horizontally deflecting and means for vertically deflecting the beams.

These beams are then caused to move along a predetermined path in order to scan the screen so as to display an image by activation of the various points of each line of this screen.

In conventional state-of-the-art monitors, this scanning includes a first part, called the active part, during which image elements between the start and the end of a line of the image frame are activated by the beams and a second part, called the inactive part, during which the beams are repositioned at the start of the next line for the display of a new line.

For conventional television monitors, the scan rate of the screen is for example 25 images/second, which leads, for a screen having 625 lines, to a scan frequency of approximately 15 kHz.

However, within the scope of a so-called high-definition television monitor, it is desirable to be able to work at a scan rate of 50 images/second with a screen having 1250 lines, which leads to a scan frequency of approximately 64 kHz.

It may be envisaged that, at these frequencies, various phenomena, in particular skin-effect conduction, lead to extremely high, or indeed destructive heating of the currently known deflectors, the greater the recommended screen formats and dimensions.

This problem is accentuated by the presence of extremely large harmonics.

The improvements provided up to now in the state of the art for solving these problems have consisted either in doubling the number of image lines, which has permitted passing from a definition of 625 lines per image to a definition of 1250 lines per image, or in doubling the number of images per second.

It can be understood that these solutions are not satisfactory in terms of the quality of the image and can be improved.

The object of the invention is therefore to solve these problems by providing a device for controlling a deflector which is simple, reliable and which can be used for the deflection of beams for scanning a screen of a monitor, especially a high-definition television monitor, whilst using acceptable scan frequencies, so as to limit the heating of the deflector.

For this purpose, the subject of the invention is a device for controlling a beam deflector for scanning a screen of a monitor, especially a high-definition television monitor, the deflector including means for horizontally deflecting and means for vertically deflecting the beams, characterised in that the horizontal deflection means are connected, on the one hand, to means for generating a symmetrical alternating voltage and, on the other hand, to S-correction means, switched at each change of slope of the symmetrical voltage, for generating, in these deflection means, a symmetrical control current for actuating a symmetrical forward-and-back scanning of the screen.

According to another aspect, the subject of the invention is also a monitor, especially a high-definition television monitor, characterised in that it includes such a device.

The invention will be better understood with the aid of the description which follows, given solely by way of example and given by referring to the attached drawings, in which :
- Fig. 1 illustrates the shape of a control current of a state-of-the-art deflector;
- Fig. 2 illustrates the shape of a control current of a deflector according to the invention;
- Fig. 3 illustrates the shape of the voltage applied at the terminals of a deflector according to the invention;
- Fig. 4 represents a schematic diagram illustrating the operation of a control device according to the invention;
- Figs. 5, 6, 7 and 8 illustrate various shapes of the voltage and current circulating in and existing at various points of a device according to the invention;
- Fig. 9 illustrates the operation of means for EAST/WEST correction of the shape of an image, involved in the make-up of a control device according to the invention;
- Fig. 10 represents a schematic diagram of means for EAST/WEST correction of the shape of the image;
- Fig. 11 illustrates the operation of means for trapezium correction of the shape of an image, involved in the make-up of a control device according to the invention;
- Fig. 12 represents a schematic diagram of a control device according to the invention including the various image-shape correction means; and
- Fig. 13 illustrates the controlling of means for vertically deflecting the beams.

The control device according to the invention is adapted for controlling the operation of a beam deflector for scanning a screen of a monitor, especially a high-definition television monitor.

This deflector includes, in a known manner, means for horizontally deflecting and means for vertically deflecting the beams.

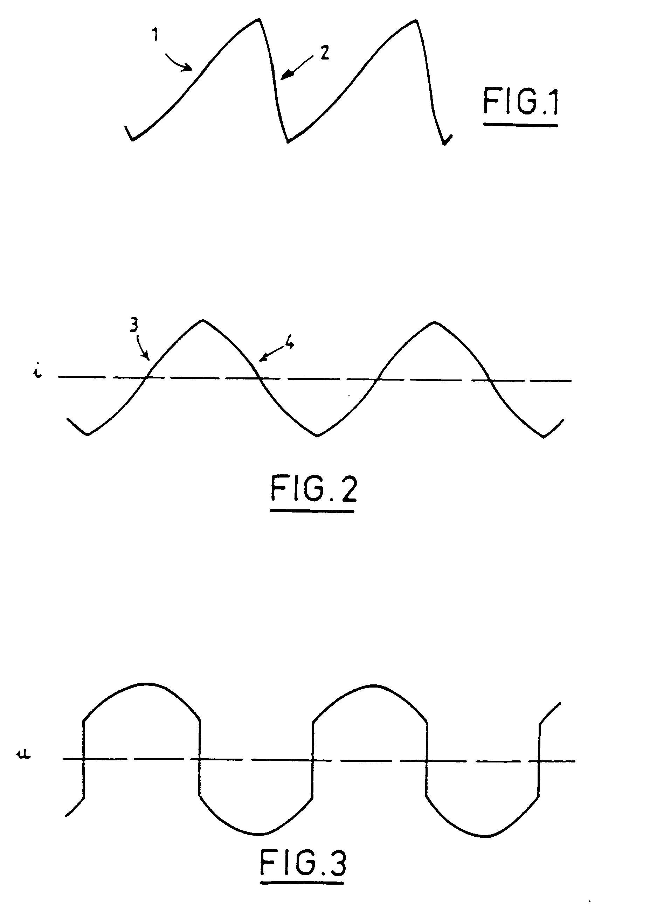

The shape of the current circulating in the means for horizontally deflecting a conventional deflector is illustrated in Fig. 1.

It may be observed that, in this figure, this current includes two parts, namely an active part designated by the general reference 1 in this figure, during which the scan beams control the activation of the various points of the screen in order to enable an image line to be displayed on the latter, and a so-called inactive part for controlling the fly-back of the beams to the start of the next line of the screen for the display of a new image line.

It should be noted that this fly-back of the beams to the start of the next screen line is performed conventionally in co-ordination with a corresponding controlling operation of the means for vertically deflecting the beams in order to cause these beams to scan the entire screen.

It will also be noted that, in particular, the active part of this signal has an S-correction, well known to specialists in the field, enabling the various points of a line of the screen to be scanned uniformly by the beams.

For the aforementioned 64 kHz scan frequency, the first part of this signal would have a duration of 13 µs and the second part of the latter would have a duration of 3 µs.

The duration of the second part of this signal, which corresponds to the fly-back time of the beams, is, as it were, the lost time and the control device according to the invention is adapted for eliminating any time loss during the scanning of the screen by the beams, so as to permit either a more rapid scanning of the screen at the same scan frequency in order to obtain a better definition of displayed image, or a reduction in the scan frequency whilst preserving an image definition comparable to that obtained by virtue of the state-of-the-art devices.

The invention is therefore based on the use of various means making it possible to generate, in the means for horizontally deflecting the beams, a symmetrical control current for actuating a symmetrical forward-and-back scanning of the screen permitting the display of the image lines during forward-and-back movements of the beams.

The current circulating in this deflector then has to have the shape represented in Fig. 2. This current also has two parts, but these two parts, designated by the references 3 and 4 in this figure, are symmetrical and enable a symmetrical forward-and-back scanning of the screen by the beams.

Each part of this signal includes a conventional-type S-correction.

If a beam deflector of this type is likened to a pure inductance, the voltage which needs to be applied at the terminals of this deflector, in order to obtain the current shape represented in Fig. 2, is given in Fig. 3.

However, a deflector is never made up of a pure inductance, but an inductance coupled to a resistance and obtaining the current represented in Fig. 2 then poses a certain number of problems.

In order to solve these problems, the control device according to the invention proposes connecting the deflector and, in particular, the means for horizontally deflecting the beams of the latter, between two stages, a first stage called a switching stage which generates the voltage necessary for the inductive part of this deflector and a second stage called a linear stage which generates the voltage necessary for the resistive part of the deflector.

The first stage is a passive stage, that is to say without energy supply, whereas the second stage is an active stage and supplies the energy dissipated in the resistance of the deflector and, more particularly, of the means for horizontally deflecting the beams.

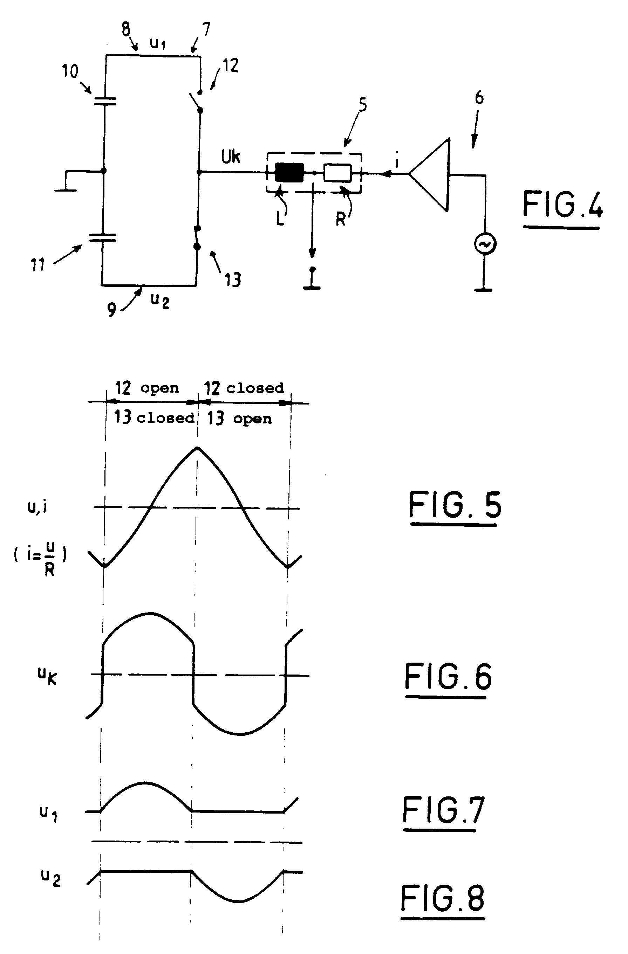

The schematic diagram of such a control device is represented in Fig. 4.

In this figure, the deflector and, more particularly the means for horizontally deflecting the beams, are designated by the general reference 5.

The resistance of these means is designated by R and the inductance by L.

These horizontal deflection means are connected, on the one hand, to means for generating a symmetrical alternating voltage, which means are designated by the general reference 6 and, on the other hand, to S-correction means designated by the general reference 7, switched at each change of slope of the symmetrical voltage, in order to generate, in these deflection means, the symmetrical control current for actuating a symmetrical forward-and-back scanning of the screen.

These S-correction means in fact comprise two symmetrical correction branches 8 and 9, each including an S-correction capacitor, 10 and 11, and a switch 12 and 13, the switches 12 and 13 of the branches being alternately closed at each change of slope of the applied symmetrical voltage.

The various shapes of voltages and currents circulating in and existing at various points of this diagram are illustrated in Figures 5, 6, 7 and 8 and it is therefore possible to observe that this control device structure enables the desired control current signal, illustrated in Fig. 2, to be obtained.

In fact, and as will be described in more detail hereinbelow, the voltage-generating means 6 are adapted for supplying a voltage signal having a triangular general shape, each slope of which has an S-precorrection for improving the S-correction generated by the S-correction means 7 which are connected to the horizontal deflection means.

This voltage can be generated by synthetic voltage-generating means comprising a memory for storing an image of the voltage to be generated, the output of which is connected to the input of a digital-to-analog converter, the output of the latter being connected to the input of an amplifier supplying this voltage.

These means will be described in more detail hereinbelow.

In one embodiment, the switches 12 and 13 are in fact formed by semiconductor switches, for example MOSFET-type transistors.

As has been indicated previously, the S-correction means 7 are switched at each change of slope of the symmetrical voltage.

This switching can therefore be triggered by means for determining each change of slope of this voltage or also by means for detecting line-synchronisation information contained in a videographic signal received by the monitor, this synchronisation information corresponding, in a known manner, to these changes of slope in order to control the passage of the beams from the end of one image line to the start of the next.

The control device according to the invention also includes means for correcting the shape of the image displayed on the screen.

These corrections are already known in the state of the art and consist of an EAST/WEST correction of the shape of the image and possibly of a trapezium correction of the latter.

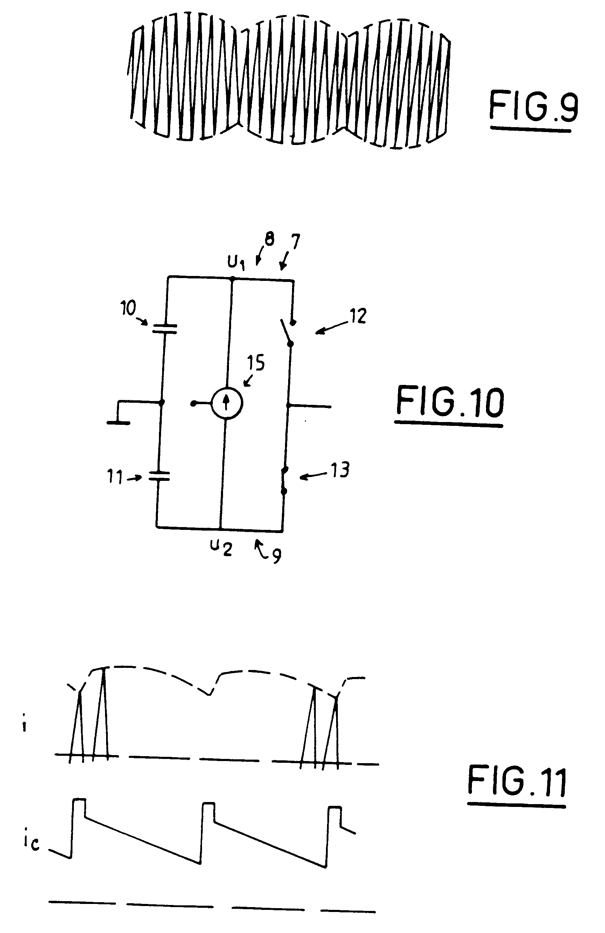

The operation of the EAST/WEST correction means of the image is illustrated in Fig. 9, and in the deflector according to the invention these correction means in fact comprise means for modulating the amplitude of the current circulating in the horizontal deflection means.

As may be seen in Fig. 10, these correction means can be made up by a current generator 15 connected between the midpoints of each branch 8 and 9 of the S-correction means 7, between the capacitor 10 or 11 and the switch 12 or 13 of each of these branches.

The operation of the means for trapezium correction of the image shape is itself illustrated in Fig. 11.

These correction means in fact comprise, as will be seen hereinbelow, means for modulating the amplitude of the symmetrical voltage applied to the horizontal deflection means in order to modulate the current circulating in them.

This correction can, of course, be directly integrated into the image of the voltage stored in the synthetic voltage-generating means.

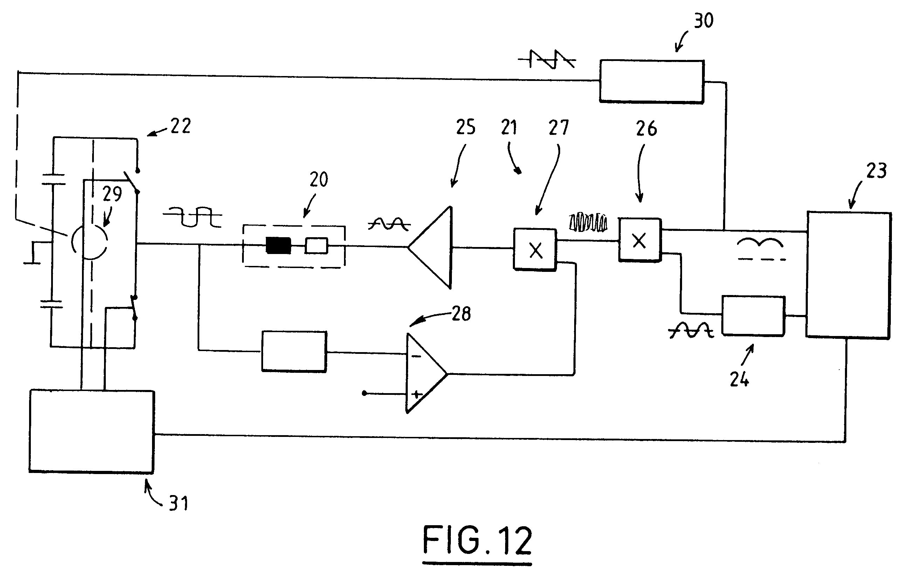

As may be seen in Fig. 12, which represents a schematic overall diagram of a device according to the invention, the deflector is designated by the general reference 20. This deflector and, more particularly the horizontal deflection means of the latter, are connected to means 21 for generating a symmetrical alternating voltage and to S-correction means 22.

The symmetrical voltage, which, as indicated previously, has a triangular general shape, each slope of which has an S-precorrection, is generated synthetically from a memory 23 for storing an image of the voltage to be generated, the output of which is connected to the input of a digital-to-analog converter 24, the output of the latter being connected to an amplifier 25 supplying the voltage.

The signal supplied by the digital-to-analog converter can be amplitude modulated in a multiplier 26 by an amplitude modulation signal coming from the memory 23 in order to ensure the trapezium correction of the image as indicated previously.

The output signal of this multiplier 26 can also be corrected by a feedback loop 28 enabling the amplitude of this function to be slowly modulated as a function of the variation in the resistance of the deflector due to the variation in temperature of the latter so as to stabilise the value of the current circulating in this deflector and therefore the image displayed on the screen.

The S-correction means 22 also comprise a current generator 29 for modulating the current circulating in the deflector in order to produce an EAST/WEST correction of the image displayed.

This current generator can in fact be connected to the output of means 30 for calculating the derivative of the signal modulating the amplitude of the voltage applied to the deflector, as output of the digital memory 23, in order to obtain adapted image-shape corrections.

The switches of the correction means are corrected via a control stage 31 to each digital memory 23 in order to enable these to be correctly switched as a function, for example, of the videographic signal received by the monitor and this memory.

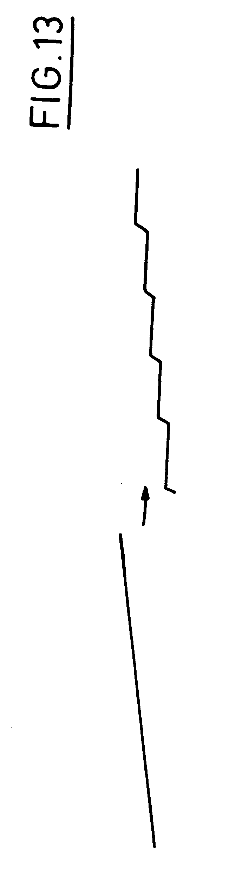

Finally, and as illustrated in Fig. 13, the means for vertically deflecting the beams of the deflector can be connected to incremental supply means, which are also controlled at each change of slope of the voltage applied to the horizontal deflection means, which enables the parallel scan lines of the screen to be obtained.

Since these supply means do not present particular problems, they will not be described in more detail.

The device according to the invention can be used in a television monitor, especially a high-definition television monitor or in any other monitor.

These monitors, which conventionally include a videographic memory, also include, in this case, means for reversing every second image line to be displayed, these means being, for example, formed by specific programming of a processing unit associated with this memory, in order to display the various image lines correctly, in the manner of a printer operating in forward-and-back mode.

## Claims

1. Device for controlling a beam deflector for scanning a screen of a monitor, especially a high-definition television monitor, the deflector (20) including means for horizontally deflecting and means for vertically deflecting the beams, characterised in that the horizontal deflection means are connected, on the one hand, to means (21) for generating a symmetrical alternating voltage and, on the other hand, to S-correction means (22), which are switched at each change of slope of the symmetrical voltage, in order to generate, in these deflection means, a symmetrical control current for actuating a symmetrical forward-and-back scanning of the screen.

2. Device according to Claim 1, characterised in that the S-correction means comprise two symmetrical correction branches (8, 9), each including a S-correction capacitor (10, 11) and a switch (12, 13), the switches (12, 13) of the branches being alternately closed at each change of slope of the symmetrical voltage.

3. Device according to Claim 1 or 2, characterised in that the voltage-generating means are adapted for supplying a voltage signal including an S-precorrection for improving this correction by the S-correction means connected to the deflection means.

4. Device according to any one of Claims 1, 2 or 3, characterised in that the symmetrical voltage has a triangular general shape, each slope of which has an S-precorrection.

5. Device according to any one of the preceding claims, characterised in that the generating means comprise synthetic voltage-generating means.

6. Device according to Claim 5, characterised in that the voltage-generating means comprise a memory (23) for storing an image of the voltage to be generated, the output of which is connected to the input of a digital-to-analog converter (24), the output of the latter being connected to an amplifier (25) supplying the voltage.

7. Device according to any one of Claims 2 to 6, characterised in that the switches (12, 13) are semiconductor switches.

8. Device according to Claim 7, characterised in that the switches comprise MOSFET-type transistors.

9. Device according to any one of the preceding claims, characterised in that the S-correction means comprise means for detecting line-synchronisation information contained in a videographic signal received by the monitor, in order to switch the S-correction means.

10. Device according to any one of the preceding claims, characterised in that it includes means for correcting the shape of the image displayed on the screen.

11. Device according to Claim 10, characterised in that the correction means comprise means for EAST-WEST correction of the image.

12. Device according to Claim 11, characterised in that the EAST-WEST correction means comprise means (29) for modulating the amplitude of the current circulating in the horizontal deflection means.

13. Device according to Claims 2 and 12, characterised in that the modulation means comprise a current generator (29) connected between the midpoints of each branch, between the capacitor and the switch, of the S-correction means.

14. Device according to any one of Claims 10 to 13, characterised in that the correction means comprise means for trapezium correction of the image.

15. Device according to Claim 14, characterised in that the trapezium correction means comprise means (23, 26) for modulating the amplitude of the symmetrical voltage applied to the horizontal deflection means.

16. Device according to any one of the preceding claims, characterised in that the vertical deflection means of the deflector are connected to incremental supply means controlled at each change of slope of the voltage applied to the horizontal deflection means.

17. Monitor, especially a high-definition television monitor, characterised in that it includes a device according to any one of the preceding claims.

18. Monitor according to Claim 17, characterised in that it includes a videographic memory and means for reversing every second image line to be displayed.
